# EUROPEAN PATENT SPECIFICATION

(11) **EP 0 686 092 B1**
(45) Date of publication and mention of the grant of the patent: **11.07.2001**
(21) Application number: 95901559.5
(22) Date of filing: 08.12.1994
(51) Int. Cl.: B32B 27/08, B32B 27/18, A61J 1/00

(54) **MULTILAYER COEXTRUDED FILM FOR PARENTERAL SOLUTIONS BAGS**
COEXTRUDIERTE MEHRSCHICHTFOLIE FÜR PARENTERALE LÖSUNGEN ENTHALTENDE BEUTEL
FILM MULTICOUCHE CO-EXTRUDE POUR LA PRODUCTION DE POCHES DESTINEES A CONTENIR DES SOLUTIONS ADMINISTREES PAR VOIE PARENTERALE

(30) Priority: 17.12.1993 CH 376993
(43) Date of publication of application: 13.12.1995
(73) Proprietor: BIEFFE MEDITAL S.A., CH-6900 Lugano (CH)
(72) Inventor: LAMBERT, Philippe, CH-6926 Montagnola (CH); BUZIO, Pier, Paolo, I-28100 Novara (IT)
(74) Representative: Dee, Ian Mark
(86) International application number: IB9400399
(87) International publication number: WO9516565

(56) References cited:
- EP-A- 0 183 512
- EP-A- 0 506 348
- WO-A-86/02041
- US-A- 4 687 688
- DATABASE WPI Week 9432, Derwent Publications Ltd., London, GB; AN 94-260057 (32) & JP,A,6 190 990 (OTSUKA SEIYAKU KOGYO KK) 12 July 1994

## Description

### DESCRIPTION

The present invention concern flexible, transparent multilayer coextruded films, on one layer of which can be possibly laminated further layers. More particularly the invention concerns a coextruded multilayer film for sterilizable, low extractable containers of parenteral solutions, said film being; flexible and trasparent before and after steam sterilization, heatseable to itself and/or to the parenteral solution container access ports by its inner or outer layer; free from aromatic adhesive, incinerable without release of halogen containing fumes; and comprising at least a layer of olefin (co-) polymers and a layer of amide (co-) polymer.

The wide diffusion of plastic containes (bags, pouches) for parenteral solutions is known; consequently also the requirement of having films adequate to this purpose is known.

### PRIOR ART

The Prior Art has suggested a lot of flexible films comprising layers of polyamide (PA) and of polyethylene (PE), all certainly interesting however not free of inconveniences. In particular US Patent N° 4,326,574 describes flexible bags made of laminates consisting of an outer layer of polypropylene (PP), an inner layer of polyethylene (PE) (in this case a polymer sustantially of ethylene units combined with a minor proportion of butylene units). and of a central layer of polyamide (PA).

The film is obtained by lamination with the aid of a polyurethane adhesive which can, in case, decompose and/or migrate into the solution during and after steam sterilization. All attempts to reproduce such a structure by coextrusion Failed: the blown coextruded PP-PA-PE had unacceptable transparency whereas the cast coextrudates could be obtained only with a PE-copolymer of very low molecular weight which was however not sterilizable in autoclave. European Patents N° 15775 and N° 102736, and US

Patents N° 3,791,915 and N° 3397382 describe several solutions which for one or the other reason do not appear to have had the hoped success.

EP-A-0506348 discloses an autoclavable, flexible multilayer film suitable for packaging medical solutions. The multilayer film comprises a first outer layer comprising a blend of an ethylene propylene copolymer and an elastomer, a second outer layer comprising a polyamide, optionally an interior layer between the first and second outer layers comprising a polyolefin and a polymeric adhesive layer adhering either the first and second outer layers or the interior and second outer layers.

It has now been found (not without surprise) that the inconveniences present in the Prior Art, either in the phase of the film coextrusion or in the phase of form-and filling and sterilization of the bags, are eliminated with the coextruded film according to the invention.

According to the present invention there is provided a cast-coextruded multilayer film as claimed in claim 1. The multilayer film comprises at least three layers :
A) an outer layer having a thickness of from 10-60 preferably 15 to 50 µm and consisting of one or more polyamides (PA);
B) an inner layer having a thickness of from 60 to 150 preferably from 80 to 130 µm, consisting of a linear low density (co-) polymer of ethylene (LLDPE) with a minor proportion from 0,5 to 10% of an alfa-olefin containing from 4 to 12 carbon atoms, or of a blend of this (co-) polymer with from 5 to 25% of a low density polyethylene (LDPE), and ophonally containing from 0,1 -3% of a slip agent;
C) a polymer adhesive intermediate layer having a thickness of from 3 to 20 µm and consisting of polyethylene (s) or ethylene copolymers with vinyl acetate (EVA). grafted with from 0.1 to 0.7% of maleic anhydride.
In one embodiment particularly advantageous, two further layers D) and E) are provided by coextrusion on the polyamidic layer A), the layer D) with a thickness of from 3 to 20, e.g. from 3 to 15 µm consisting of polyethylene or polypropylene treated with maleic anhydride and the layer E) with a thickness of from 20 to 100, e.g. from 20 to 60 µm consisting of a statistic (co-) polymer of propylene or of polyethylene. In another embodiment the layer 0) is laminated on the polyamide layer with a polyurethanic adhesive layer with thickness of from 2 to 10 µm.

From these fully coextruded or coextruded-laminated films according to the invention, pouches were prepared showing high characteristics of seal strength, softness, transparency, weldability and tensile strength. Characteristically the adhesive resin between the polyamide (PA) layer A) and the polyethylene (PE)layer B) is preferably selected from the group of polyethylene (s) (LLDPE or LPDE) containing 0.1 - 0,7% of maleic anhydride (AM) whereas the resin between the layers A) (PA) and E) (PP) is polypropylene with 0,1 - 0,5% maleic anhydride.

For bags up to three liters of parenteral solution the preferred thickness and composition of the film according to the invention are as follows:

| layer | composition | | thickness, µm | preferred thickness |
|---|---|---|---|---|
| A | PA | | 10-50 | 15-35 |
| B | PE | | 60-150 | 80-130 |
| C | LDPE or LLDPE | 0,1-0,7% AM | 5-20 | 7 - 15 |
| adhesives | or | | | |
| D | PP | 0,1-0,5% AM | 3-20 | 7-15 |
| E | PP | | 20-100 | 15-40 |

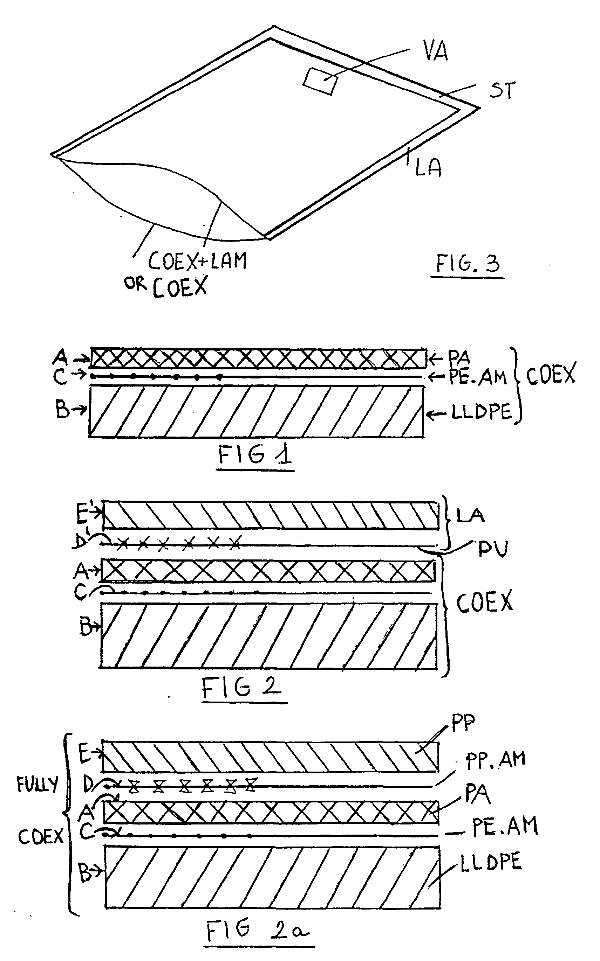

The further features and advantages of the invention will better appear from the examples describing the embodiments schematically represented in the drawing in which Figure 3 shows an open pouch ST sealed on the edges LA and provided with a valve VA. figure 1 shows the basic coextrudate with three layers A) (PA), B) (PE) and C) (adhesive) formed of polyethylene PE grafted with maleic anhydride (AM): and Figure 2 shows the relevant coextrudated/laminated of 5 layers i. e. with the addition of layers D') (adhesive = Polyurethane, PU) and E) (PP): and Figure 2a shows the fully coextrudated 5 layers Film formed of the basic 3 layers (A-C-B) structure of Fig. 1, and of the additional two coextruded layers D) and E) consisting respectivaly of maleic anhydride grafted polypropylene (PP.AM), and of polypropylene (PP).

### Description of the preferred embodiments

The examples 1 - 6 below illustrate the preferred (but not limitative) embodiments.

### Ranges of thickness (in µm) for containers up to 3 liters

| | | |
|---|---|---|
| A | (PA) | 10-50 |
| B | (PE) | 60-150 |
| C | (Polymeric adhesive) | 5-20 |
| D | (Polymeric adhesive) | 3-20 |
| E | (PP) | 20-100 |

### Example 1

A multilayer structure (ABC) containing 3 layers (Fig. 1):

The outer layer (A) consists of 30 µm polyamide-6 from EMS (grade XE 3314): the inner layer (B) consists of 110 µm of C₈-LLDPE from DSM (grade Stamylex 1046) additivated with 500 ppm of Erucamide slip agent (1% masterbatch Polybatch slip FSU 105 E of Schulman); the adhesive layer (C) consists of 10 µm of a I : 1 blend of 2 low density polyethylenes (LDPE) grafted with about 1.8% maleic anhydride such as those of DUPONT Bynel 402 and 408.

This coextruded structure was used to fabricate one liter pouches on a form-fill-seal (FFS) machine at 25 bags/minute: which were sterilized at 118°C. exhibited low extractables, good transparency and were leak free.

The same structure was also gravure printed on the polyamide (PA) side (A) and then was laminated with a cast film consisting of random propylene-ethylene copolymer such as MOPLEN EP 1X35F of HIMONT having a thickness of 50 µm (layer E¹); the adhesive layer (D¹) between the coextruded structure (A-B-C) and layer (E¹) was a conventional two components polyurethane glue with a coating weight dry matter of 3 g/m² The resulting semi-coextrudate/laminate film (Fig. 2) was processed through the same FFS machine to obtain leak free parenteral containers that exhibited excellent transparency and low extractables.

### Film processing conditions

The above structure A B C was produced on a REIFENHÄUSER COMPACT cast coextrusion line for multilayer sheet film.

| | |
|---|---|
| Line output | 200 kg/hour |
| Chill roll temperature | 38°C - 40°C on PA side |
| Winding speed | 13,5 m/min. |
| Air knife combined with air suction under the die. | |
| Feedblock | 265°C |
| Die | 1.5 meter wide - 272° to 274°C |

- PA extruder
   - screw diameter:: 70 mm
   - output:: 55 kg/hr.
   - RPM:: 28
   - Barrel temperature:: 245 to 260°C
   - Filter:: 260°C
- PE extruder
   - screw diameter:: 90 mm
   - output:: 120 kg/hr.
   - RPM:: 40
   - Barrel temperature:: 165 to 210°C
   - Filter temperature:: 200°C
- Polymeric adhesive extruder:
   - screw diameter:: 50 mm
   - output:: 15 kg/hr.
   - RPM:: 40
   - Barrel temperature:: 165°C to 210°C
   - Filter temperature:: 200°C

**Table 1:**

| **semi-coex and semi-coex laminate properties (Example I)** | | | |
|---|---|---|---|
| **Film properties** | **(a)** | **(b)** | **(c)** |
| Total thickness (µm) | 200 | 200 | 148 |
| Interlayer adhesive strength | | | |
| PA/PE (N/15 mm) | 12.0 | 7.5 | 11.0 |
| PA/PP (N/15 mm) | 11.0 | 6.0 | --- |
| Seal strength (N/15 mm) | | | |
| PE/PE | 75 | 70 | 55 |
| PP/PP | 35 | 30 | --- |
| Tensile strength (MPa) | | | |
| MD/TD | 38/30.5 | 30.7/27.8 | 29/25.8 |
| Yield strength (MPa) | | | |
| MD/TD | 19.3/19 | 24.5/23.9 | 18.9/18.8 |
| Elongation at break % | | | |
| MD/TD | 526/481 | 407/435 | 421/407 |
| 1% secant modulus (MPa) | | | |
| MD/TD | 136/137 | 110/116 | 120/116 |
| Coefficient of friction | | | |
| (COF) - static PE/PE | 0.30 | 0.26 | 0.32 |
| Note: | | | |

| | | | |
|---|---|---|---|
| **(a)** semi-coex / laminate before sterilization | | | |
| **(b)** semi-coex / laminate after sterilization | | | |
| **(c)** semi-coex / before lamination after sterilization | | | |

### Example 2

### A 3 layers structure consisting of:

The outer layer (A) consists of 30 µm of a 20/80 blend of copolyamide PA_{6/12}-PA₆ of respective grades EMS XE 3303 and EMS XE 3180.(*)

The inner layer (B) consists of 100 µm of C₈-LLDPE - DOWLEX SC 2100 additivated with 500 ppm slip agent (1% masterbatch FSU 105 E(**) of Schulman).

The adhesive layer (C) consists of 10 µm of grafted LLDPE YPAREX 8104E from DSM. *)C8-LLDPE indicates linear low density polyetylene containing octene; (**)E means Erucamide.

The processing conditions and film properties are comparable to those of the structure (c) of Example 1

### Example 3

### A 3 layers structure consisting of:

The outer layer (A) consists of 30 µm of polyamide-6 from EMS - grade XE 3180

The inner layer (B) consists of 110 µm of a 80/20 blend of C₈ LLDPE from DSM (grade Stamylex 1026) and LDPE from Exxon (grade Escoreme LD 100 AG) additivated with 500 ppm slip agent (1% masterbatch FSU 105 E = Erucamide)

The adhesive layer (C) consists of 10 µm of maleic anhydride grafted LLDPE from MITSUI (grade ADMER NF 530 E).

The processing conditions and film properties are similar to those of the structure (c) of Example 1

### Example 4

A fully coextruded 5 layers film (figure 2a)

A five layers structure(EDACB) consisting of a core layer (A) consisting of 30 µm of polyamide₆ from EMS (grade XE 3180); an inner layer (B) consisting of 100 µm of C₈ LLDPE from DSM (grade Stamylex 1026) additivated with 500 ppm Erucamide slip agent (1% masterbatch Polybatch slip FSU 105 E of Schulman); a polymeric adhesive layer (C) between layer (A) and (B), consisting of 8 µm of maleic anhydride grafted LLDPE YPAREX 8104 E from DSM; an outer layer (E) of 35 µm of ethylene-propylene random copolymer from PCD - DAPLEN KFC 2206SB; a polymeric adhesive layer (D) consisting of 10 µm of maleic anhydride grafted polypropylene (PP) from ATO (grade OREVAC PP-FT), between layers (A) and (E)

### Film processing conditions

The line on which the structure was produced is the same as on Example 1.

| | |
|---|---|
| Total output | 200 kg/hour |
| Chill roll temperature | 38°C - 40°C on the LLDPE side |
| Winding speed | 13.5 m/min. |
| Air knife combined with air suction under the die. | |
| Feedblock temperature | 265°C |
| Die | 1.5 meter wide - 271°C to 274°C |

- PA extruder
   - screw diameter:: 50 mm
   - output:: 35 kg/hr.
   - RPM:: 55
   - Barrel temperature:: 235°C to 250°C
   - Filter:: 248°C
- PP extruder
   - screw diameter:: 90 mm
   - output:: 35 kg/hr.
   - RPM:: 20
   - Barrel temperature:: 210°C to 242°C
   - Filter temperature:: 240°C
- LLDPE extruder
   - screw diameter:: 70 mm
   - output:: 110 kg/hr.
   - RPM:: 70
   - Barrel temperature:: 200°C to 240°C
   - Filter temperature:: 250°C
- PP adhesive extruder
   - screw diameter:: 50 mm
   - output:: 10 kg/hr.
   - RPM:: 38
   - Barrel temperature:: 190°C to 220°C
   - Filter temperature:: 220°C
- PE adhesive extruder
   - screw diameter:: 50 mm
   - output:: 10 kg/hr.
   - RPM:: 27
   - Barrel temperature:: 190°C to 225°C
   - Filter temperature:: 230°C

**Table 2:**

| **5 layers coextrudate properties (Example 4)** | |
|---|---|
| **Film properties before sterilization** | **Values** |
| Total thickness | 185 |
| (µm) | |
| Interlayer adhesive strength (N/15 mm) | |
| PA/PE | 17 |
| PA/PP | 15 |
| Seal strength (N/15 mm) | |
| PE/PE | 70 |
| PP/PP | 33 |
| Tensile strength (MPa) | |
| MD/TD | 34.6/26.8 |
| Yield strength (MPa) | |
| MD/TD | 15.3/15.0 |
| Elongation at break % | |
| MD/TD | 490/430 |
| 1% secant modules (MPa) | |
| MD/TD | 125/118 |
| Coefficient of friction | |
| (COF) - static | 0.32 |

### Example 5

A fully coextruded 5 layers film

A five layer structure (E D A C B) consisting of the same composition and thickness as in example 4 with the exception of layer A, which contains a modified PA consisting of a blend of 85% of polyamide-6 from EMS grade XE 3180 and 15% of PA 6I/6T from EMS grade Grivory G21.

### Film processing conditions

Same as Example 4 with the exception of PA extruder (A).
- PA extruder (A)
   - screw diameter:: 50 mm
   - output:: 35 kg/hr.
   - RPM:: 56
   - Barrel temperature:: 235°C to 248°C
   - Filter temperature:: 248°C.

**Table 3:**

| **5 layers coextrudate properties (Example 5)** | |
|---|---|
| **Film properties before sterilization** | **Values** |
| Total thickness | |
| (µm) | 183 |
| Interlayer adhesive strength (N/15 mm) | |
| PA/PE | 20 |
| PA/PP | 16 |
| Seal strength (N/15 mm) | |
| PE/PE | 85 |
| PP/PP | 35 |
| Tensile strength (MPa) | |
| MD/TD | 36/34 |
| Yield strength (MPa) | |
| MD/TD | 14.5/14.8 |
| Elongation at break % | |
| MD/TD | 480/500 |
| 1% secant modulus (MPa) | |
| MD/TD | 132/130 |
| Coefficient of friction | |
| (COF) - static | 0.34 |

### Example 6

A 3 layers structure was prepared as follows:

The outer layer (A) consists of 30 µm of a blend of 85% polyamide₆ from EMS, grade XE 3180 and 15% of polyamide 6I/6T from EMS, grade Grivory G21.

The inner layer (B) consists of 110 µm of C₈ LLDPE from DSM (Grade Stamylex 1026) additivated with 500 ppm Erucamide slip agent (1% masterbatch Polybatch slip FSU 105E).

The adhesive layer (C) consists of 10 µm of maleic anhydride grafted LLDPE YPAREX 8104 E from DSM.

### Film processing conditions

The line on which the structure was produced is the same as on Example 1; also the same processing conditions apply with the exception of ¹⁾ the polyamide extruder (C).
- Polyamide extruder (C)
   - screw diameter:: 70 mm
   - output:: 60 kg/hr.
   - RPM:: 30
   - Barrel temperature:: 235°C to 255°C
   - Filter temperature:: 255°C.
2) The die temperature is between 270°and 273°C.

**Table 4 :**

| **semi coextrudate properties (Example 6)** | |
|---|---|
| **Film properties before sterilization** | **Values** |
| Total thickness | |
| (microns) | 148 |
| Intertayer adhesive strength (N/15 mm) | |
| PA/PE | 19 |
| Seal strength (N/15 mm) | |
| PE/PE | 72 |
| Tensile strength (MPa) | |
| MD/TD | 31/29.5 |
| Yield strength (MPa) | |
| MD/TD | 19/18 |
| Elongation at break % | |
| MD/TD | 480/505 |
| 1% secant modulus (MPa) | |
| MD/TD | 132/124 |
| Coefficient of friction (PE/PE) | |
| (COF) - static | 0.32 |

## Claims

1. A cast-coextruded multilayer film for sterilizable, low extractable containers for parenteral solutions, said film being: flexible and transparent before and after steam sterilization, heat sealable to itself and to the parenteral solution container access ports by an inner layer, free from aromatic adhesives, incinerable without release of halogen containing fumes, and comprising at least an inner layer (B), an outer layer (A) and a polymeric adhesive intermediate layer (C) between the inner layer (B) and the outer layer (A), said film being obtained by cast-coextruding, wherein:
A) the outer layer has a thickness of from 10-60 µm and consists of one or more polyamides (PA);
B) the inner layer has a thickness of from 60 to 150 µm, and consists of a linear low density copolymer of ethylene (LLDPE) with a minor proportion of from 0.5 to 10% of an alpha-olefin containing from 4 to 12 carbon atoms and ophonally a slip agent;
C) the polymeric adhesive intermediate layer has a thickness of from 3 to 20 µm and consists of polyethylene(s) or an ethylene copolymer with vinyl acetate (EVA), grafted with from 0.1 to 0.7% of maleic anhydride.

2. A cast-coextruded multilayer film according to claim 1, further including two further layers (D) and (E) coextruded on the outer layer (A), layer (D) having a thickness of from 3 to 20 µm and consisting of polyethylene or polypropylene grafted with maleic anhydride, and layer (E) having a thickness of from 20 to 100 µm and consisting of a statistic copolymer of propylene or of polyethylene.

3. A cast-coextruded multilayer film according to claim 1 further including an additional layer (E') laminated on the outer layer (A) with a polyurethane adhesive layer (D') having a thickness of from 2 to 10 µm, wherein the additional layer (E') consists of polyethylene or polypropylene and has a thickness of from 20 to 100 µm.

4. A cast-coextruded multilayer film according to any one of claims 1 to 3, wherein layer (A) has a thickness of from 15 to 50 µm.

5. A cast-coextruded multilayer film according to any one of claims 1 to 4, wherein layer (B) has a thickness of from 80 to 130 µm.

6. A cast-coextruded multilayer film according to any one of claims 1 to 5, wherein layer (B) further comprises a slip agent.

7. A bag for containing a parenteral solution formed of a cast-co-extruded multilayer film as claimed in any one of claims 1 to 6.

8. A bag containing a parenteral solution formed of a cast-co-extruded multilayer film as claimed in any one of claims 1 to 6.

9. A bag as claimed in claim 7 or claim 8 in the form of a pouch

## Patentansprüche

1. Koextrusionsgegossene Mehrschichtfolie für sterilisierbare, gering extrahierbare Behälter für parenterale Lösungen, wobei die Folie folgendes ist: flexibel und transparent vor und nach der Dampfsterilisation, warmschweißfähig mit sich selbst und mit den Behälterzugangsöffnungen für die parenterale Lösung durch eine innere Schicht, frei von aromatischen Klebstoffen, verbrennbar ohne Freisetzung von halogenhaltigen Dämpfen, und die Folie folgendes aufweist: wenigstens eine innere Schicht (B), eine äußere Schicht (A) und eine Zwischenschicht (C) aus polymerem Klebstoff zwischen der inneren Schicht (B) und der äußeren Schicht (A), wobei die Folie durch Koextrusionsgießen erhalten wird, wobei:
A) die äußere Schicht eine Dicke von 10 bis 60 *µ* m hat und aus einem oder mehreren Polyamiden (PA) besteht;
B) die innere Schicht eine Dicke von 60 bis 150 *µ*m hat und aus einem Ethylencopolymer niedriger Dichte mit linearer Struktur (LLDPE) mit einem geringen Anteil von 0,5 bis 10 % eines alpha-Olefins, das 4 bis 12 Kohlenstoffatome enthält, und fakultativ einem Gleitmittel besteht;
C) die Zwischenschicht aus polymerem Klebstoff eine Dicke von 3 bis 20 *µ*m hat und aus Polyethylen(en) oder einem Ethylencopolymer mit Vinylacetat (EVA), gepfropft mit 0,1 bis 0,7 % Maleinsäureanhydrid besteht.

2. Koextrusionsgegossene Mehrschichtfolie nach Anspruch 1, die ferner zwei weitere Schichten (D) und (E) aufweist, die auf der äußeren Schicht (A) koextrudiert sind, wobei Schicht (D) eine Dicke von 3 bis 20 *µ*m hat und aus Polyethylen oder Polypropylen, gepfropft mit Maleinsäureanhydrid, besteht und Schicht (E) eine Dicke von 20 bis 100 *µ*m hat und aus einem statistischen Copolymer aus Propylen oder Polyethylen besteht.

3. Koextrusionsgegossene Mehrschichtfolie nach Anspruch 1, die ferner eine zusätzliche Schicht (E') aufweist, die mit einer Polyurethanklebstoffschicht (D'), die eine Dicke von 2 bis 10 *µ*m hat, auf die äußere Schicht (A) laminiert ist, wobei die zusätzliche Schicht (E') aus Polyethylen oder Polypropylen besteht und eine Dicke von 20 bis 100 *µ*m hat.

4. Koextrusionsgegossene Mehrschichtfolie nach einem der Ansprüche 1 bis 3, wobei Schicht (A) eine Dicke von 15 bis 50 *µ*m hat.

5. Koextrusionsgegossene Mehrschichtfolie nach einem der Ansprüche 1 bis 4, wobei Schicht (B) eine Dicke von 80 bis 130 *µ*m hat.

6. Koextrusionsgegossene Mehrschichtfolie nach einem der Ansprüche 1 bis 5, wobei Schicht (B) ferner ein Gleitmittel aufweist.

7. Beutel zur Aufnahme einer parenteralen Lösung, der aus einer koextrusionsgegossenen Mehrschichtfolie nach einem der Ansprüche 1 bis 6 gebildet ist.

8. Beutel, der eine parenterale Lösung enthält und aus einer koextrusionsgegossenen Mehrschichtfolie nach einem der Ansprüche 1 bis 6 gebildet ist.

9. Beutel nach Anspruch 7 oder Anspruch 8 in Form eines Sacks.

## Revendications

1. Film multicouche co-extrudé par coulée pour conteneurs stérilisables faiblement extractibles pour solutions à administrer par voie parentérale, ledit film étant : flexible et transparent avant et après une stérilisation à la vapeur, thermosoudable sur lui-même et sur les orifices d'accès du conteneur de solution à administrer par voie parentérale au moyen d'une couche interne, exempt d'adhésifs aromatiques, apte à être incinéré sans libération de fumées contenant des halogènes, et comprenant au moins une couche interne (B), une couche externe (A) et une couche intermédiaire d'adhésif polymère (C) entre la couche interne (B) et la couche externe (A), ledit film étant obtenu par co-extrusion par coulée, dans lequel :
A) la couche externe a une épaisseur de 10-60 µm et est constituée d'un ou plusieurs polyamides (PA) ;
B) la couche interne a une épaisseur de 60 à 150 µm et est constituée d'un copolymère d'éthylène linéaire de faible densité (LLDPE) avec une petite proportion de 0,5 à 10 % d'une alpha-oléfine contenant de 4 à 12 atomes de carbone, et éventuellement d'un agent de glissement ;
C) la couche intermédiaire d'adhésif polymère a une épaisseur de 3 à 20 µm et est constituée de polyéthylène(s) ou d'un copolymère d'éthylène avec de l'acétate de vinyle (EVA), greffé avec 0,1 à 0,7 % d'anhydride maléique.

2. Film multicouche co-extrudé par coulée selon la revendication 1, comprenant, en outre, deux couches supplémentaires (D) et (E) co-extrudées sur la couche externe (A), la couche (D) ayant une épaisseur de 3 à 20 µm et étant constituée de polyéthylène ou de polypropylène greffé avec de l'anhydride maléique, et la couche (E) ayant une épaisseur de 20 à 100 µm et étant constituée d'un copolymère statistique de propylène ou de polyéthylène.

3. Film multicouche co-extrudé par coulée selon la revendication 1, comprenant, en outre, une couche supplémentaire (E') stratifiée sur la couche externe (A) avec une couche d'adhésif de polyuréthanne (D') ayant une épaisseur de 2 à 10 µm, dans lequel la couche supplémentaire (E') est constituée de polyéthylène ou de polypropylène et a une épaisseur de 20 à 100 µm.

4. Film multicouche co-extrudé par coulée selon l'une quelconque des revendications 1 à 3, dans lequel la couche (A) a une épaisseur de 15 à 50 µm.

5. Film multicouche co-extrudé par coulée selon l'une quelconque des revendications 1 à 4, dans lequel la couche (B) a une épaisseur de 80 à 130 µm.

6. Film multicouche co-extrudé par coulée selon l'une quelconque des revendications 1 à 5, dans lequel la couche (B) comprend, en outre, un agent de glissement.

7. Poche destinée à contenir une solution à administrer par voie parentérale, formée d'un film multicouche co-extrudé par coulée selon l'une quelconque des revendications 1 à 6.

8. Poche contenant une solution à administrer par voie parentérale, formée d'un film multicouche co-extrudé par coulée selon l'une quelconque des revendications 1 à 6.

9. Poche selon la revendication 7 ou la revendication 8 sous la forme d'un sachet.
